# EUROPEAN PATENT SPECIFICATION

(11) **EP 1 958 279 B1**
(45) Date of publication and mention of the grant of the patent: **14.07.2010**
(21) Application number: 06815496.2
(22) Date of filing: 26.09.2006
(51) Int. Cl.: H01M 4/58, C01G 53/00

(54) **BATTERY HAVING A HIGHLY COMPRESSED POSITIVE ELECTRODE**
BATTERIE MIT HOCHKOMPRIMIERTER POSITIV-ELEKTRODE
PILE AYANT UNE ÉLECTRODE POSITIVE HAUTEMENT COMPRESSÉE

(30) Priority: 27.09.2005 US 236368
(43) Date of publication of application: 20.08.2008
(73) Proprietor: Medtronic, Inc., Minneapolis, MN 55432-5604 (US)
(72) Inventor: SCOTT, Erik R., Minnesota 55311 (US); DANG, Tri-Cuong, Minnesota 55127 (US); BRUNNER, Robert H., Minnesota 55427 (US); GILLESPIE, Larry J., Minnesota 55112 (US); VANELZEN, Collette M., Minnesota 55398 (US)
(74) Representative: Hughes, Andrea Michelle
(86) International application number: PCT/US2006/037544
(87) International publication number: WO 2007/038541

(56) References cited:
- EP-A- 1 117 145
- EP-A1- 0 918 041
- EP-A2- 1 195 827

## Description

### FIELD OF THE INVENTION

Most of the disclosures generally relate to batteries, and more particularly relate to lithium ion rechargeable batteries having electrodes formed from compressed composite films.

### BACKGROUND OF THE INVENTION

Implantable medical devices (IMDs) are commonly used today to provide therapies to patients suffering from various ailments. One type of IMD, a neurostimulator, delivers mild electrical impulses to neural tissue using an electrical lead. For example, electrical impulses may be directed to specific neural sites to provide pain relief and to reduce the need for pain medications and/or repeat surgeries. Neurostimulators may also be utilized to treat other conditions such as incontinence, sleep disorders, movement disorders such as Parkinson's disease and epilepsy, and other psychological, emotional, and other physiological conditions.

A neurostimulator is commonly implanted in the abdomen, upper buttock, or pectoral region of a patient, depending in part on the therapy that the neurostimulator is to provide. A lead assembly extends from the neurostimulator to electrodes that are positioned on or near an area of a targeted tissue such as the spinal cord or brain. A lead extension may be coupled to the neurostimulator at a proximal end thereof, and coupled to the lead assembly at a distal end thereof. The implanted neurostimulation system is configured to deliver mild electrical pulses to the spinal cord. The electrical pulses are delivered through the lead assembly to the electrodes.

An ideal power source for a neurostimulator or other IMD is also very small so it can supply energy from a small package volume. Lithium ion batteries are becoming recognized as a workable power source option for implantable neurostimulators, and other IMDs that may require recharging such as monitors, sensors, and drug pumps. High energy density, safety, and reliability associated with lithium ion batteries have also led to their selection for use in artificial hearts and in implantable cardiac devices such as left ventricular assist devices. Such implantable devices are being built increasingly smaller, and lithium batteries are correspondingly being built smaller and thinner, and with increasingly higher energy densities.

A lithium ion battery includes a positive electrode that has an electrochemically higher potential, and a negative electrode that has an electrochemically lower potential. Conventional active materials for a positive electrode in lithium ion batteries include LiCoO₂, LiNiₓCo(₁₋ₓ)O₂, LiMn₂O₄, and LiNi_{0.33}Mn_{0.33}Co_{0.33}O₂. LiCoO₂ is a particularly suitable positive electrode active material for lithium ion batteries because LiCoO₂ itself has a relatively high energy density. Further, since charging is carried out through the deintercalation of lithium ions from the crystalline structure of the LiCoO₂ active material, and discharging is carried out by the intercalation of lithium ions into the crystalline structure of the active material, the lithium ion battery has an optimal voltage plateau in the battery and electrode discharge curves.

One method of manufacturing a dense LiCoO₂ positive electrode for a lithium ion battery includes depositing a coating of the LiCoO₂ active material, a binder, and a solvent onto a foil substrate. The coating is dried and cured, and then compressed in a calender. Typically, the compressed density of the positive electrode coating for a lithium battery is about 3.09 g/cm³. For example, in a conventional arrangement the coating is deposited to an initial loading density of 22 mg/cm² on each side of a substrate at a thickness of 105 µm, and compressed to a thickness of 71.5 µm to yield a final density of about 3.09 g/cm³.

Battery manufacturers are continuously seeking for technology advancements that will improve a battery's energy density and power density, and will also decrease a battery's capacity fade. It is conventionally thought that a positive correlation exists between the extent that the positive electrode active material is compressed and the energy density. However, it is also conventionally understood that compressing higher than 3.09 g/cm³ will reduce the battery power capability and the battery cycle life since high compression reduces the accessibility of electrolyte through the electrode pores.

Accordingly, it is desirable to overcome the limitations associated with conventional batteries.

### BRIEF SUMMARY OF THE INVENTION

An implantable medical device comprises a housing, circuitry enclosed in the housing and configured at least to transmit therapeutic stimulatory pulses to a patient, and an electrochemical cell enclosed therein. The electrochemical cell comprises an electrode assembly having a negative electrode, a positive electrode and an electrolyte disposed therebetween. The positive electrode includes an alkali metal active material compressed to a density ranging between 3.3 and 3.7 g/cm³. In one preferred embodiment, the alkali metal active material is compressed to 3.5 g/cm³.

A method is also provided for manufacturing a positive electrode for an electrochemical cell. The method comprises the steps of preparing an active material mixture comprising an alkali metal, and compressing the active material mixture onto a metal foil to a density ranging between 3.3 and 3.7 g/cm³. In one preferred embodiment, the active material mixture is compressed to 3.5 g/cm³.

### BRIEF DESCRIPTION OF THE DRAWINGS

The present invention will hereinafter be described in conjunction with the following drawing figures, wherein like numerals denote like elements, and
FIG. 1 is a perspective view of a neurostimulator assembly associated with a patient, the neurostimulator assembly having a plurality of leads coupled to electrodes that are disposed near a patient's spine;
FIG. 2 is a cross-sectional view of a battery disposed in a neurostimulator, particularly depicting the windings of an electrode assembly around a mandrel;
FIG. 3 is a partially cut-away side view of a positive electrode assembly;
FIG. 4 is a cross-sectional view of the positive electrode assembly illustrated in FIG. 3, taken along line 4-4 in FIG. 3;
FIG. 5 is a flow chart outlining a method of manufacturing a positive electrode assembly;
FIG. 6 is a cross-sectional view of a positive electrode and a negative electrode positioned side-by-side with a separator disposed between the two electrodes;
FIG. 7 is a graph that includes plots of experimental and expected data for the capacity density of a composite electrode coating as a function of coating mass density;

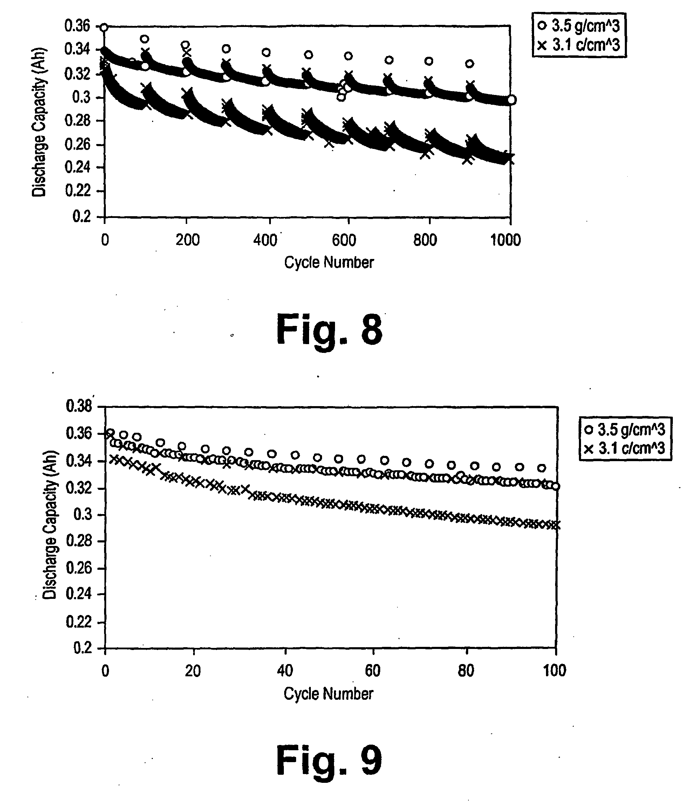

FIG. 8 is a graph that plots discharge capacity data sets for a series of accelerated battery charging and discharging cycles for a battery having active material in the positive electrode compressed to a conventional density, and also for a battery having active material in the positive electrode compressed to a higher than conventional density; and FIG. 9 is a graph that plots discharge capacity data sets for a series of weekly battery charging and discharging cycles for a battery having active material in the positive electrode compressed to a conventional density, and also for a battery having active material in the positive electrode compressed to a higher than conventional density.

### DETAILED DESCRIPTION OF THE INVENTION

The following detailed description of the invention is merely exemplary in nature and is not intended to limit the invention or the application and uses of the invention. While the following description is set forth with reference to a neurostimulator, the principles of the claimed invention may be implemented in other IMDs as well.

The neurostimulator typically includes a hermetically sealed housing that is impervious to body fluids. The neurostimulator also includes a connector header for making electrical and mechanical connection with one or more leads bearing electrodes adapted to be located at or near targeted tissue. The housing is typically formed of a suitable body-compatible material approved for medical use, such as titanium. Typically, the housing is formed having major opposed surfaces joined together by sides enclosing an interior housing chamber or cavity and having electrical feedthroughs extending therethrough and into the connector header. The cavity houses receives an electrochemical cell and both high voltage (HV) and low voltage (LV) electronic circuitry, which can comprise ICs, hybrid circuits and discrete components, e.g. a step-up transformer and at least one high voltage output capacitor.

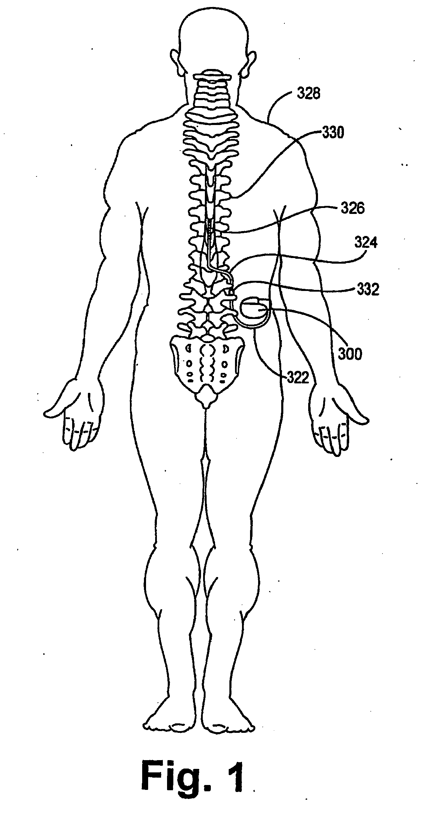

FIG. 1 depicts a spinal cord stimulation (SCS) assembly implanted in a patient. The assembly includes a neurostimulator 300, a lead extension 322 having a proximal end coupled to the neurostimulator 320, and a lead 324 having a proximal end coupled to the distal end of the extension 322 and a distal end coupled to one or more electrodes 326. A lead connector at the proximal end of lead 324 may be coupled directly to the neurostimulator 320 instead of the indirect connection by way of the lead extension 322 depicted in FIG. 1. The neurostimulator 320 may be implanted in the abdomen of a patient 328, and the lead 324 placed along the spinal cord 330. As stated previously, the neurostimulator 320 may have one or more leads, each lead having a plurality of electrodes. The neurostimulator 320 includes an electrochemical cell as a power source, and electronics for sending precise, electrical pulses to the spinal cord to provide a desired therapy.

Although the lead 324 is positioned to stimulate a specific site in the spinal cord 330 in FIG. 1, it may also be positioned on or near other tissue such as the peripheral nerve or adjacent neural tissue ganglia, the brain, and muscle tissue. Furthermore, electrodes 326 may be epidural, intrathecal or placed into spinal cord 330 itself.

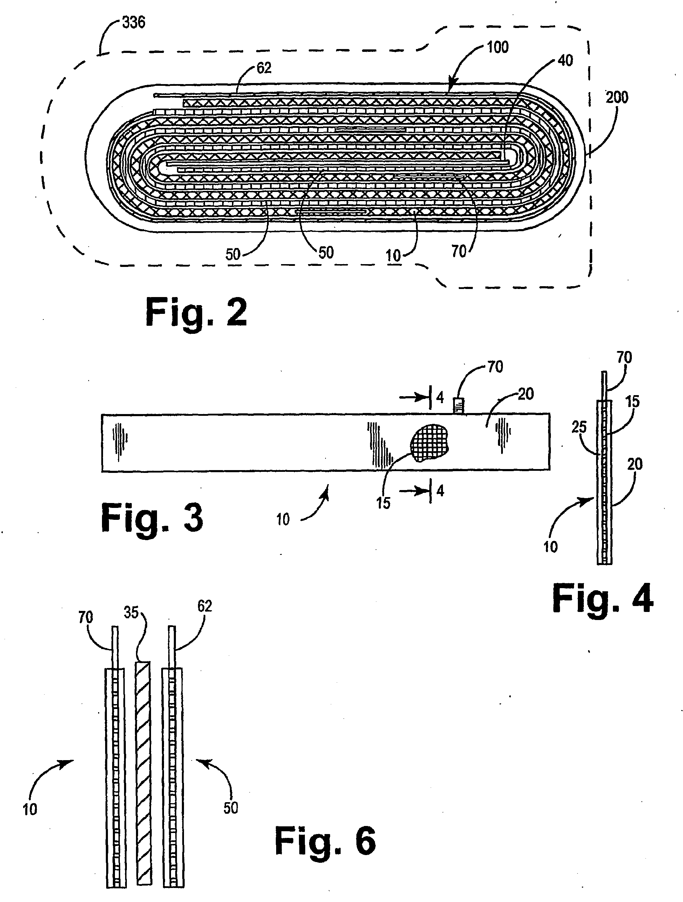

FIG. 2 is a cross-sectional view of a battery 200 disposed in the housing 336 of an IMD. The IMD may be a neurostimulator such as that depicted in FIG. 1, an implantable cardiac defibrillator, a spinal or deep brain stimulator, a sensor, a drug pump, an artificial heart, and so forth. The battery 200 may be encased in stainless steel or other metal such as titanium, aluminum, or alloys thereof. Other exemplary battery cases are made of plastic materials, or a plastic-foil laminate material such as an aluminum foil provided between a polyolefin layer and a polyester layer.

In the particular embodiment depicted in FIG. 2, the electrode assembly 100 is wound to fit into a prismatic cell. However, other winding arrangements may be utilized to accommodate various battery shapes, sizes, and configurations. One exemplary prismatic battery case has dimensions of about 30 to 40 mm by about 20 to 30 mm by about 5 to 7 mm.

The battery 200 includes an electrode assembly 100, including a positive electrode assembly 10 wound with a negative electrode assembly 50 around a mandrel 40. The mandrel may be removed before the battery 200 is used. Separators are provided intermediate or between the positive and negative electrodes, although for the sake of clarity the electrodes 10 and 50 are depicted without separators in FIG. 2. Other electrode arrangements include flat, planar, and folded configurations.

A connector tab 70 associated with the positive electrode 10 protrudes from the electrode assembly 100 as depicted in FIGs. 3 and 4. Another connector tab 62 associated with the negative electrode 50 protrudes from the electrode assembly 100 and is spaced apart from the connector tab 70 that is associated with the positive electrode 10 to avoid inadvertent short circuits in the completed battery 200. The connector tabs 62 and 70 are preferably positioned to be close to their intended connection point when the electrode assembly 100 is connected to a feedthrough in a neurostimulator or other IMD. In an exemplary embodiment, the negative electrode 50 is coupled to an intended connection point using nickel or nickel alloy tabs. In another exemplary embodiment, the positive electrode 10 is coupled to an intended connection point using aluminum or aluminum alloy tabs.

FIGs. 3 to 4 depict an elongated positive electrode assembly 10, which includes a metal foil that functions as a current collector 15 onto which layers 20 and 25 of a composite that includes an active material are pressed. The positive electrode assembly 10 is thin and flat, and has an essentially uniform width. The connector tab 70 projects from the current collector edge, although more tabs may be included depending on the conductivity and current distribution for the active material.

The current collector 15 is a conductive metal foil that is associated with active material in layers 20 and 25. An exemplary current collector is an aluminum or aluminum alloy foil. An exemplary foil has a thickness between about 5 µm and about 75 µm.

Other exemplary current collectors are formed in various grid configurations including a mesh grid, an expanded metal grid, and a photochemically etched grid.

The positive electrode active material in layers 20 and 25 is a material or compound that includes lithium. Exemplary active materials in the layers 20 and 25 are compounds that include in the molecule lithium, one or more transition metals, and oxygen. Examples of such compounds include LiCoO₂ LiNiₓCo₍₁₋ₓ)O₂, LiMn₂O₄, and LiNiₓMn_{y}Co_{z}O₂ wherein x+y+z=1. In many cases it is desirable to include a small amount of a conductivity enhancer to the composite layers 20 and 25. Exemplary conductivity enhancers include various forms of carbon, including graphite and carbon black. Other suitable conductivity enhancers include electronically conductive polymers. The conductivity enhancer concentration ranges between about 0.5% and about 10% by wight. Further, exemplary composite layers 20 and 25 include a binder. Suitable binders include polymers such as polyvinylidine fluoride, polyvinylidene difluoride (PVDF)-hexafluoro propylene (HFP) copolymer, and styrene-butadiene rubber. The binder concentration ranges between about 2% and about 10% by weight.

The active material layers 20 and 25 are between about 30 µm and about 5 mm thick. Exemplary layers 20 and 25 are between about 30 µm and 300 µm thick, and the layers are most preferably about 70 µm thick.

The negative electrode 50 also includes a current collector, which is also made of a conductive material such as a metal associated with an active material. Exemplary negative electrode current collectors include a film of a metal such as copper, a copper alloy, titanium, a titanium alloy, nickel, and a nickel alloy. The negative electrode current collector may be formed in any of the above-described current collector configurations, such as a foil or a grid. An exemplary negative electrode current collector foil is between about 100 nm and 100 µm in thickness, preferably between about 5 µm and about 25 µm in thickness, and most preferably about 10 µm in thickness.

Negative electrode active materials may include a carbonaceous material such as petroleum coke, carbon fiber, mesocarbon microbeads (MCMB), elements and oxides that are reactive with Li such as Sn, SnO₂, and Si, and combinations of such active materials. A particular exemplary active material is MCMB. An additive such as carbon black may be included in the active material, along with a binder such as polyvinylidine fluoride (PVDF) or an elastomeric polymer. An exemplary active material ranges between about 0.1 µm and about 3 mm in thickness, preferably between about 25 µm and about 300 µm in thickness, and most preferably between about 20 µm and about 90 µm in thickness.

An electrolyte is provided between the positive and negative electrodes 10 and 50 to provide a medium through which lithium ions may travel. An exemplary electrolyte is a liquid that includes a lithium salt dissolved in one or more non-aqueous solvents. Other exemplary electrolytes include a lithium salt dissolved in a polymeric material such as poly(ethylene oxide) or silicone, an ionic liquid such as N-methyl=N-alkylpyrrolidinium bis(trifluoromethanesulfonyl)imide salts, and a solid state electrolyte such as a lithium-ion conducting glass such as lithium phosphorous oxynitride (LiPON).

Various other electrolytes may be used, such as a mixture of propylene carbonate, ethylene carbonate, and diethyl carbonate (PC:EC:DEC) in a 1.0 M salt of LiPF₆, and a polypropylene carbonate solvent and a lithium bis-oxalatoborate salt. Other electrolytes may include one or more of a PVDF copolymer, a PVDF-polyimide material, an organosilicon polymer, a thermal polymerization gel, a radiation-cured acrylate, a particulate with polymer gel, an inorganic gel polymer electrolyte, an inorganic gel-polymer electrolyte, a PVDF gel, polyethylene oxide (PEO), a glass ceramic electrolyte, phosphate glasses, lithium conducting glasses, lithium conducting ceramics, and an inorganic ionic liquid or gel. Some exemplary electrolytes include a mixture of organic carbonates with 1 molar LiPF₆ as the lithium salt.

The electrolyte includes one or more additives that are intended to reduce the occurrence of capacity fade in the battery 200. Exemplary additives that may be used include organoboron compounds such as trimethoxyboroxine (TMOBX) and its derivatives.

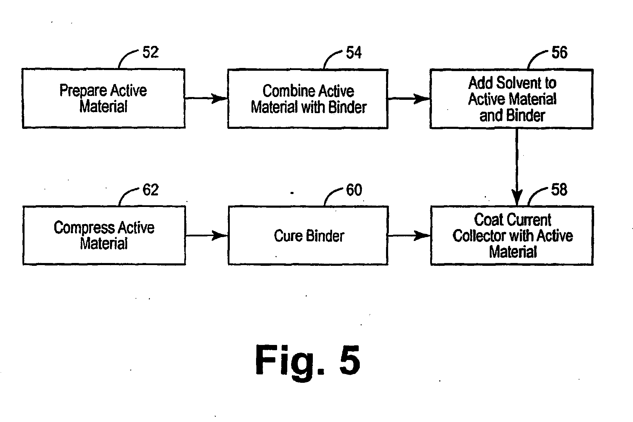

A procedure for fabricating the positive electrode assembly 10 will now be discussed in conjunction with FIG. 5. An active material is prepared as step 52 by sifting or otherwise dividing the active material into a fine powder. Although several active materials are suitable, in this example the active material is lithium cobalt oxide LiCoO₂. The active material is mixed with a binder as step 54. In this example the polymeric binder is polyvinylidine fluoride. As the active material and binder are mixed, a conductivity enhancer such as graphite powder may be combined as well. The mixture is mixed with an organic solvent as step 56. The solution including at least the solvent, active material, and the binder is then cast onto an aluminum foil substrate as an active material coating as step 58. The solvent-cast coating is heated and dried until the polymeric binder is cured as step 60. The composite-coated aluminum foil is then compressed in a calender as step 62. The assembly is compressed until the composite reaches a density ranging between about 3.3 g/cm³ and about 3.7 g/cm³, and preferably until the composite reaches a density of about 3.5 g/cm³.

After forming the electrode assembly 10, a porous separator is provided between the positive and negative electrodes. FIG. 6 depicts a separator 35 disposed between the positive electrode 10 and the negative electrode 50. The separator 35 is formed from a porous polymer such as a polyolefin, with exemplary materials including polyethylene or polypropylene.

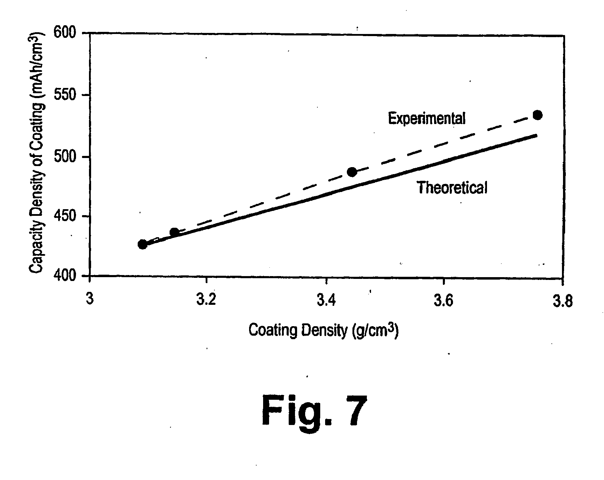

As previously discussed, an exemplary positive electrode assembly includes a composite of active material and a polymeric binder that is compressed to a final density ranging between about 3.3 g/cm³ and about 3.7 g/cm³, and preferably about 3.5 g/cm³. It is conventionally understood that a positive correlation exists between the extent that the positive electrode active material is compressed and the energy density. Indeed, comparative tests on both positive electrodes compressed to 3.09 g/cm³ and the exemplary highly compressed positive electrodes provided data revealing that highly compressed electrodes have about 16% higher energy density. However, compressing the electrode to more than 3.09 g/cm³ likely reduces the battery power capability and life cycle since high compression may have a detrimental effect on the battery electrical properties. This is because compression higher than 3.09 g/cm³ could cause damage to the particles of active material and could reduce the amount of void space that allows electrolyte to permeate the active material. A relatively unimpeded ionic transport of electrolyte through an open pore structure is important for optimal battery function at high power. Consequently, positive electrode compression to densities higher than 3.09 g/cm³ is conventionally thought to decrease battery power and current density, and increase impedance values. Yet, unexpectedly high capacity density values result from compressing the composite above 3.09 g/cm³ as established in the following examples and data summarized in FIGS. 7 to 9.

FIG. 7 graphically depicts plots of experimental and expected data for the capacity density of a composite electrode coating (measured in mAh/cm³), as a function of coating mass density (measured in g/cm³). The experimental data represents a test for positive electrodes that were made by coating a slurry containing LiCoO₂ powder, graphite powder, polyvinylidine fluoride (PVDF) and n-methyl pyrrolidone (NMP) solvent onto a 20 micron thick layer of Al foil. The cured composition of the coating was 90% LiCoO₂, 6% powdered graphite and 4% PVDF. The cured coating was calendered to thicknesses ranging from 58 to 70 microns, such that the coating density ranged from 3.09 to 3.76 g/cm³. Disks of 2 cm² were punched from these coatings and assembled into 2032-type coin cells. The cells were cycled versus a Li negative electrode at 0.2 mA between 4.2 and 3.0 V, in an electrolyte consisting of 1 M LiPF₆ in a mixture of propylene carbonate (PC), ethylene carbonate (EC) and diethyl carbonate (DEC).

The data points in FIG. 7 indicate experimentally measured values, and the solid line represents the theoretical result. The theoretical result was obtained by multiplying 427 mAh by the quotient p/3.09, wherein p is the mass density and 427 mAh is the capacity density measured when p is equal to 3.09 g/cm³. As depicted in FIG. 7, the experimental values fall above the theoretical line, indicating that densifying the electrodes above 3.09 g/cm³, results in a capacity density that is greater than what one would expect simply based on a linear scaling with the mass density.

Particularly high capacity retention (i.e., low capacity fade) values were obtained when the composite was compressed to about 3.5 g/cm³ as exemplified by the data presented in the graphs of FIGs. 8 to 9. The improvement is further surprising in view of the traditional understanding that undesirable surface reactions on the negative electrode active material predominantly affect the capacity fade rate.

FIG. 8 is a graph that represents discharge capacity data sets for a series of accelerated battery charging and discharging cycles. Specifically, the graph compares the discharge capacity for a representative battery having active material in the positive electrode compressed to 3.09 g/cm³ with a battery having active material in the positive electrode compressed to 3.5 g/cm³. Both batteries had identical chemical compositions, and the active material composites in each of the positive electrodes consisted of LiCoO₂ at a concentration of 90% by weight, the polymeric binder polyvinylidine fluoride at a concentration of 4% by weight, and graphite powder as a conductivity enhancer at a concentration of 6% by weight. Electrodes were coated onto both sides of a 20 micron layer of A1 foil and assembled into wound prismatic Li ion batteries using a conventional negative electrode, porous separator and electrolyte. The batteries were cycled at an accelerated rate by charging at 150 mA to 4.15 V and discharging at 75 mA to 2.75 until each battery had experienced more than 1000 charging and discharging cycles. Every 100^{th} cycle, the cells were subject to slower cycles that consisted of a 50 mA charge and 12.5 mA discharge. These slower cycles show up as spikes in the capacity data, because they are less subject to impedance-related capacity loss. As depicted in FIG. 8, although both batteries initially had similar discharge capacities, the battery with the positive electrode active material compressed to 3.5 g/cm³ consistently exhibited higher discharge capacity values than the battery having active material compressed to 3.09 g/cm³.

FIG. 9 is a graph that represents discharge capacity data sets for batteries that experienced a series of weekly charge and discharge cycles. The batteries had identical compositions that were also identical to the batteries that underwent accelerated discharging cycles at 75 mA discharge rates, and weekly discharging cycles at 2 mA discharge rates for nearly two years. Each of the batteries experienced a discharge over a period of a week, for over 100 charge and discharge cycles. As depicted in FIG. 9, although both batteries initially had similar discharge capacities, the battery with the positive electrode active material compressed to 3.5 g/cm³ consistently exhibited higher discharge capacity values than the battery having active material compressed to 3.09 g/cm³. The degree of reduction in capacity fade rate ranges from 35 to 41%, with the degree of capacity fade rate reduction being more profound at higher charge and discharge rates. Table 1 summarizes the cycle data for both the accelerated and weekly cycles.

**TABLE 1**

| Group | Cycle Type | First Cycle Capacity (Ah) | Cycled Capacity (Ah) | Relative Capacity Lost since Formation | Relative Benefit of Densification |
|---|---|---|---|---|---|
| 3.5 g/cm³ | Accelerated--801 cycles | 0.358 | 0.300 | 16% | 41.0% |
| 3.1g/cm³ | | 0.359 | 0.260 | 27% | |
| | | | | | |
| 3.5g/cm³ | Weekly--41 cycles | 0.358 | 0341 | 5% | 35.3% |
| 3.1g/cm³ | | 0.359 | 0.333 | 7% | |

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. An electrochemical cell for use in an implantable medical device, the electrochemical cell comprising:
a negative electrode (50);
a positive electrode (10); and
an electrolyte disposed between the negative and positive electrodes;
**characterized in that** said positive electrode has an alkali metal active material compressed to a density ranging between 3.3 and 3.7 g/cm³.

2. The electrochemical cell of claim 1, wherein the positive electrode active material is compressed to a density of 3.5 g/cm³.

3. The electrochemical cell of claim 1, wherein the positive electrode active material is a compound selected from the group consisting of LiCoO₂, LiNiₓCo(₁₋ₓ)O₂, LiMn₂O₄, and LiNiₓMn_{y}Co_{z}O₂ wherein x+y+z=1.

4. The electrochemical cell of claim 3, wherein the positive electrode active material comprises LiCoO₂.

5. The electrochemical cell of claim 1, wherein the positive electrode active material further comprises a polymeric binder.

6. The electrochemical cell of claim 1, wherein the positive electrode active material further comprises a form of carbon as a conductivity enhancer.

7. The electrochemical cell of claim 1, wherein the positive electrode comprises a metal foil having the active material compressed thereon at a thickness ranging between 30 µm and 5 mm.

8. An implantable medical device, the device comprising:
a housing (336)
circuitry (300) enclosed in the housing and configured at least to transmit therapeutic stimulatory pulses to a patient; and
an electrochemical cell (200) s claimed in any preceding claim adapted to power at least the circuitry.

9. A method of manufacturing a positive electrode for an electrochemical cell, which comprises:
preparing an active material mixture comprising an alkali metal; and
compressing the active material mixture onto a metal foil to a density ranging between 3.3 and 3.7 g/cm³.

10. The method of claim 9, wherein compressing the active material mixture brings the active material to a density of 3.5 g/cm³.

11. The method of claim 9, wherein active material mixture comprises LiCoO₂

12. The method of claim 9, wherein the active material mixture further comprises a polymeric binder.

13. The method of claim 9, wherein the active material mixture further comprises a form of carbon as a conductivity enhancer.

14. The method of claim 9, wherein after compressing the active material mixture onto the metal foil, the active material has a thickness ranging between 30 µm and 5 mm.

## Patentansprüche

1. Elektrochemische Zelle zur Verwendung in einer implantierbaren medizinischen Vorrichtung, wobei die elektrochemische Zelle aufweist:
eine negative Elektrode (50);
eine positive Elektrode (10); und
einen zwischen der negativen und der positiven Elektrode angeordneten Elektrolyten, **dadurch gekennzeichnet, dass** die positive Elektrode ein aktives Alkalimetallmaterial aufweist, das auf eine Dichte im Bereich zwischen 3,3 und 3,7 g/cm³ komprimiert ist.

2. Elektrochemische Zelle nach Anspruch 1, bei der das aktive Material der positiven Elektrode auf eine Dichte von 3,5 g/cm³ komprimiert ist.

3. Elektrochemische Zelle nach Anspruch 1, bei der das aktive Material der positiven Elektrode eine Verbindung ist, die aus der Gruppe ausgewählt ist, die aus LiCoO₂, LiNiₓCo₍₁₋ₓ)O₂, LiMn₂O₄ und LiNiₓMnyCo_{z}O₂ besteht, wobei x+y+z=1.

4. Elektrochemische Zelle nach Anspruch 3, bei der das aktive Material der positiven Elektrode LiCoO₂ aufweist.

5. Elektrochemische Zelle nach Anspruch 1, bei der das aktive Material der positiven Elektrode ferner ein Polymerbindemittel aufweist.

6. Elektrochemische Zelle nach Anspruch 1, bei der das aktive Material der positiven Elektrode ferner eine Form von Kohlenstoff als einen Leitfähigkeitsverbesserer aufweist.

7. Elektrochemische Zelle nach Anspruch 1, bei der die positive Elektrode eine Metallfolie aufweist, die das aktive Material hierauf komprimiert aufweist und die eine Dicke zwischen 30 µm und 5mm aufweist.

8. Implantierbare medizinische Vorrichtung, wobei die Vorrichtung aufweist:
ein Gehäuse (336),
eine Schaltung (300), die in dem Gehäuse eingeschlossen und wenigstens dafür eingerichtet ist, stimulatorische therapeutische Pulse an einen Patienten zu übertragen; und
eine elektrochemische Zelle (200) wie in einem der vorstehenden Ansprüche beansprucht, die dafür eingerichtet ist, wenigstens die Schaltung zu speisen.

9. Verfahren zur Herstellung einer positiven Elektrode für eine elektrochemische Zelle, das beinhaltet:
Herstellen einer Mischung eines aktiven Materials, die ein Alkalimetall aufweist; und
Komprimieren der Mischung des aktiven Materials auf eine Metallfolie auf eine Dichte im Bereich zwischen 3,3 und 3,7 g/cm³.

10. Verfahren nach Anspruch 9, bei dem das Komprimieren der Mischung des aktiven Materials das aktive Material auf eine Dichte von 3,5 g/cm³ bringt.

11. Verfahren nach Anspruch 9, bei dem die Mischung des aktiven Materials LiCoO₂ aufweist.

12. Verfahren nach Anspruch 9, bei dem die Mischung des aktiven Materials ferner ein Polymerbindemittel aufweist.

13. Verfahren nach Anspruch 9, bei dem die Mischung des aktiven Materials ferner eine Form von Kohlenstoff als Leitfähigkeitsverbesserer aufweist.

14. Verfahren nach Anspruch 9, bei dem nach dem Komprimieren der Mischung des aktiven Materials auf die Metallfolie das aktive Material eine Dicke im Bereich zwischen 30 µm und 5mm aufweist.

## Revendications

1. Cellule électrochimique à utiliser dans un dispositif médical implantable, la cellule électrochimique comportant :
une électrode négative (50) ;
une électrode positive (10) ; et
un électrolyte disposé entre les électrodes négative et positive ;
**caractérisée en ce que** ladite électrode positive a un matériau actif en métal alcalin compressé à une densité comprise entre 3,3 et 3,7 g/cm³.

2. Cellule électrochimique selon la revendication 1, dans laquelle le matériau actif de l'électrode positive est compressé à une densité de 3,5 g/cm³.

3. Cellule électrochimique selon la revendication 1, dans laquelle le matériau actif de l'électrode positive est un composant sélectionné à partir du groupe constitué de Li-CoO₂, LiNiₓCo₍₁₋ₓ₎0₂, LiMn₂O₄, et LiNiₓMn_{y}Co_{z}O₂ où x+y+z=1.

4. Cellule électrochimique selon la revendication 3, dans laquelle le matériau actif de l'électrode positive comporte LiCoO₂.

5. Cellule électrochimique selon la revendication 1, dans laquelle le matériau actif de l'électrode positive comporte en outre un liant polymère.

6. Cellule électrochimique selon la revendication 1, dans laquelle le matériau actif de l'électrode positive comporte en outre une forme de carbone en tant qu'amplificateur de conductivité.

7. Cellule électrochimique selon la revendication 1, dans laquelle l'électrode positive comporte une feuille de métal ayant le matériau actif compressé sur celle-ci à une épaisseur comprise entre 30 µm et 5 mn.

8. Dispositif médical implantable, le dispositif comportant :
un boîtier (336)
un circuit (300) contenu dans le boîtier et configuré au moins pour transmettre des impulsions de stimulation thérapeutique à un patient ; et
une cellule électrochimique (200) comme revendiqué dans l'une quelconque des revendications précédentes adaptée pour alimenter au moins le circuit.

9. Procédé de fabrication d'une électrode positive pour une cellule électrochimique, lequel comporte les étapes consistant à :
préparer un mélange de matériaux actifs comportant un métal alcalin ; et
compresser le mélange de matériaux actifs sur une feuille de métal à une densité comprise entre 3,3 et 3,7 g/cm³.

10. Procédé selon la revendication 9, dans lequel la compression du mélange de matériaux actifs amène le matériau actif à une densité de 3,5 g/cm³.

11. Procédé selon la revendication 9, dans lequel le mélange de matériaux actifs comporte LiCoO₂.

12. Procédé selon la revendication 9, dans lequel le mélange de matériaux actifs comporte en outre un liant polymère.

13. Procédé selon la revendication 9, dans lequel le mélange de matériaux actifs comporte en outre une forme de carbone en tant qu'amplificateur de conductivité.

14. Procédé selon la revendication 9, dans lequel après la compression du mélange de matériaux actifs sur la feuille de métal, le matériau actif a une épaisseur comprise entre 30 µm et 5mm.
